# EUROPÄISCHE PATENTSCHRIFT

(11) **EP 1 776 687 B1**
(45) Veröffentlichungstag und Bekanntmachung des Hinweises auf die Patenterteilung: **27.12.2017**
(21) Anmeldenummer: 05774401.3
(22) Anmeldetag: 11.08.2005
(51) Int. Cl.: G09B 9/042

(54) **FAHRSIMULATOR ZUM EINSATZ IN FAHRBEREITEN UND NICHT FAHRBEREITEN KRAFTFAHRZEUGEN**
DRIVING SIMULATOR FOR USE IN READY TO DRIVE OR NON READY TO DRIVE MOTOR VEHICLES
SIMULATEUR DE CONDUITE DESTINE A ETRE UTILISE DANS DES VEHICULES AUTOMOBILES EN ETAT DE MARCHE OU NON

(30) Priorität: 12.08.2004 DE 202004012868 U; 12.08.2004 DE 202004012869 U
(43) Veröffentlichungstag der Anmeldung: 25.04.2007
(73) Patentinhaber: Rudolph, Stephan, 14129 Berlin (DE)
(72) Erfinder: Rudolph, Stephan, 14129 Berlin (DE)
(74) Vertreter: Hertin und Partner Rechts- und Patentanwälte PartG mbB
(86) Internationale Anmeldenummer: PCT/DE2005/001440
(87) Internationale Veröffentlichungsnummer: WO 2006/015592

(56) Entgegenhaltungen:
- (C)CURIOUS! INTERACTIVE MARKETING SOLUTIONS: "Smart-Mover Produktbeschreibung"[Online] Mai 2004 (2004-05), Seiten 1-5, XP002358423 Gefunden im Internet: URL:http://www.smart-mover.de/pdf/Smart-Mo ver%20Produktbeschreibung_28_04_04_1.pdf> [gefunden am 2005-12-09]
- KONTUR NETWORX: "Smart-Mover, der heimliche Star des Automobilforum 2004 in Stuttgart"[Online] 12. Mai 2004 (2004-05-12), Seiten 1-2, XP002358424 Gefunden im Internet: URL:http://www.kontur-networx.de/smartmove r/pdf/Presse_Nachlese_OF_20041.pdf> [gefunden am 2005-12-09]
- STEPHAN RUDOLPH: "Weltweit erste Präsentation des mobilen Fahrsimulators SMART-MOVER auf dem Automobil-Forum in Stuttgart am 4./5. Mai 2004"[Online] 28. April 2004 (2004-04-28), Seiten 1-2, XP002358425 Gefunden im Internet: URL:http://www.kontur-networx.de/smartmove r/pdf/smart-mover-presse_28_04.2004.pdf> [gefunden am 2005-12-09]
- STEPHAN RUDOLPH: "Weltweit erste Präsentation des mobilen Fahrsimulators SMART-MOVER auf dem Automobil-Forum in Stuttgart am 4./5. Mai 2004"[Online] 28. April 2004 (2004-04-28), Seiten 1-2, XP002358426 Gefunden im Internet: URL:www.hymer-idc.de/idc_d/500News/Automob ilforum_040422.doc> [gefunden am 2005-12-09]
- CURIOUS! INTERACTIVE MARKETING SOLUTIONS: "News & Events"[Online] 9. Dezember 2005 (2005-12-09), Seiten 1-8, XP002358493 Gefunden im Internet: URL:http://www.smart-mover.de/content_de/p resse/presse.php> [gefunden am 2005-12-09]

## Beschreibung

Die Erfindung betrifft einen mobilen Fahrsimulator mit eingebautem Bewegungssystem sowie die Bewegungssysteme des Fahrsimulators. Das System dient zur Fahrsimulation in einem fahrbereiten oder nicht fahrbereiten realen Kraftfahrzeug.

Fahrsimulatoren unter Verwendung von echten Fahrzeugen, Fahrzeugattrappen oder anderer Cockpitsysteme sind bekannt. In der Regel bestehen diese aus einer Art Plattform, auf dem das Fahrzeug oder seine Attrappe montiert ist und auf diese dann Aktuatoren zur Simulation von Längs- und Querbeschleunigung sowie des Nick-, Roll- und Gierwinkels. Weiterhin besitzen diese Simulatoren Systeme zu Übertragung von Bild-, Ton- und Kraftrückmeldedaten. Diese Systeme sind aufgrund Ihrer Konstruktionsmerkmale entweder statisch (das bedeutet ohne Bewegung) oder sie sind ortsgebunden, weil ein Transport aufwendig und teuer wäre.

Es existieren auch Ausführungen von Bewegungssystemen mit zwei Achsen, die, wie in der DE 102 11 884 beschrieben, Längs- und Querbeschleunigung simulieren. Dieses System kann keine Fahrbahnenebenheiten glaubhaft darstellen und ist weiterhin auch aufwendig zu transportieren.

Weiterhin gibt es auch Simulatoren, welche ein fahrbares Kraftfahrzeug beinhalten. Die DE 199 28 490 A1 beschreibt ein solches System, welches den Nachteil hat, dass es sich nicht bewegt.

In der DE 41 09 827 A1 wird ein Simulator beschrieben, welcher aus einem LKW Führerhaus, das auf zwei Teilschalen, die 90° versetzt sind, bewegt wird. Dieses System ist ohne größeren logistischen Aufwand nicht von einem Ort zu einem anderen zu transportieren. Weiterhin kann dieses System keine Beschleunigungen in der Z-Achse darstellen.

Ein echtes Fahrzeug als Bestandteil eines Simulators wird auch in der DE 200 00 556 U1 beschrieben. Dieses System besteht aus einem auf eine Wippenkonstruktion aufmontierten Jeep und ist äußerst aufwendig in der Aufstellung und Inbetriebnahme.

Der Bewegungsantrieb zur Simulation der Wankbewegung eines Autos wird in der DE 100 34 731 A1 beschrieben. Die darin offenbarte Vorrichtung wird unter ein Auto geschoben, um Fliehbeschleunigungen beim Kurvenfahren zu simulieren. Dieses System kann keine Schlaglöcher oder Kopfsteinpflaster spürbar machen. Weiterhin kann es keine Nick- und Aufbäumbewegungen abbilden.

Weiterhin gibt es reale Fahrzeuge (so genannte Lowrider), bei denen die Stoßdämpfer entfernt und gegen hydraulische Aktuatoren ersetzt wurden. Dadurch bewegen sie sich zwar, können aber wegen fehlender Schnittstellen und Sensorik keinen Bezug zur Simulation herstellen.

Alle bislang aufgeführten Simulationssysteme sind aufgrund ihrer Konstruktion bestimmten Einsatzzwecken wie beispielsweise Fahrtraining, Forschung oder Entertainment zuzuordnen. So kann zum Beispiel das in der DE 102 11 884 C1 offenbarte System nur schwer im Unterhaltungsbereich eingesetzt werden. Dadurch, dass es für den Einsatz bei Fahrschulen konzipiert ist, wäre es für den Unterhaltungsbereich, in dem andere Anforderungen bestehen, gänzlich ungeeignet.

Im Stand der Technik wurde außerdem in der "Smart-Mover Produktbeschreibung" [http://www.smart-mover.de/pdf/S mart-Mover%20Produktbeschreibung_28_04_04_1.pdf] ein Fahrsimulator beschrieben, der die für eine realistische Simulation notwendige Technologie bereits in einem Simulator vereint hat. In einer Präsentation [http://www.kontur-networx.de/smartmover/pdf/smart-mover-presse_28_04.2004.pdf] wurden weitere Details zu diesem System beschrieben. Der hier beschriebene Fahrsimulator ist fahrtauglich und wird über eine hydraulische Regelungstechnik gesteuert. Der Simulator verfügt außerdem über Positionssensoren, eine Bedieneinheit und einer Projektionseinrichtung. Es ist jedoch im Stand der Technik nicht bekannt, wie die Simulation vorteilhaft gestaltet werden muss, um einen nahezu realistisches Fahrverhalten zu simulieren. Es bestand daher das Bedürfnis ein verbessertes System bereitzustellen. Ein solches System wird durch die Erfindung bereitgestellt.

Ausgehend von diesem Stand der Technik, ist es Aufgabe der vorliegenden Erfindung, einen Fahrsimulator für den Einsatz in reale fahrbereite oder nicht fahrbereite Fahrzeuge unter Erhalt der Fahrfunktion oder Rollfunktion zu schaffen, welcher zum einen Fahrsituationen wie Anfahren, Bremsen, Querbeschleunigungen bei Kurvenfahrten glaubhaft darstellen kann, der transportabel ist und in kürzester Zeit in Betrieb genommen werden kann.

Gelöst wird diese Aufgabe durch die selbstständigen Ansprüche.

Die Erfindung bietet in Form des Fahrsimulators ein einmaliges dynamisches System:

Es wird ein virtuelles Abbild des Fahrzeugs geschaffen, in dem ein Benutzer/Bediener sitzt, und zugleich wird ein virtuelles Abbild einer beliebigen, frei wählbaren Fahrsituation bzw. eines Fahrzustandes erzeugt, die exakt auf das reale Fahrzeug zurück übertragen wird. Der Begriff exakt bezieht sich im Sinne der Erfindung auf das menschliche Empfinden und ist auf die Bewegungsdynamik gerichtet; somit meint der Begriff im Sinne der Erfindung im Wesentlichen exakt.

Das virtuelle Vehikel in der Simulation ist ein maßstäbliches Abbild des echten Vehikels. Der Maßstab ist zum Beispiel 1 : 75. Wenn das virtuelle Vehikel mit 100 km/h über eine starke Bodenwelle fährt, federn seine virtuellen Stoßdämpfer den maximalen Weg von 0,666 mm bis zum Anschlag ein und je nach Physikmodell des Vehikels danach 1,333 mm aus. Der Simulator hingegen fährt nach ca. 40 Millisekunden Verzögerung 50 mm ein und danach 100 mm aus. Diese Maße sind die Maße der Verfahrwege des echten Vehikels in eingefahrenem und ganz ausgefahrenem Zustand.

Weil das Ansprechen der virtuellen Stoßdämpfer vom Fall abhängig ist (Anfahren, Bremsen, Anfahren am Berg, Lenkreaktion und Masseträgheit bei hohen Geschwindigkeiten) bewegt sich auch das echte Vehikel vollkommen vom Fall abhängig. Der Fahrer erkennt z. B., dass er auf eine Bodenwelle aufgefahren ist und bekommt die dementsprechende Bewegung der Fahrgastzelle zu spüren. Den Rest übernehmen das Soundsystem und das hydraulische Kraftrückmeldesystem, welches die Illusion weiter abrunden kann.

Dieses System erlaubt völlig neue Anwendungen eines Fahrsimulators. Es kann zum tatsächlichen Erleben eines für den Benutzer neuen Fahrzeugs dienen, ohne dass dieser das Fahrzeug tatsächlich "auf die Straße" bringen muss. Es dient der Übung und dem Erlernen des Umgangs mit einem Fahrzeug. Hierzu ist das System derart ausgestaltet, dass es auf einfache Weise in ein wirkliches Fahrzeug (reales Fahrzeug) installierbar ist. Zudem ist es so dimensioniert, dass es in dem jeweiligen Fahrzeug mitführbar und in kurzer Zeit auch installierbar ist. Das System zur Fahrsimulation ist mithin mobil und kann von einem zum anderen Ort in dem Fahrzeug selbst transportiert werden. Es stehen unendliche Varianten der Erzeugung einer virtuellen Fahrsituation zur Verfügung (beispielsweise - aber nicht ausschließlich - auf einer Landstrasse, auf einem Highway, im Gebirge, bei Regen, Schnee und Eis, auf einer Schotterstrasse, auf Strassen mit Hindernissen, in dichtem Verkehr, aber auch beim Einparken etc.).

Danach ist es erfindungsgemäß vorgesehen, dass ein System zur Fahrsimulation in einem fahrbereiten Kraftfahrzeug aus mehreren Komponenten besteht, nämlich
a) einem doppelt wirkenden hydraulischen Aktuator pro Radaufhängung, wobei die Aktuatoren bezüglich ihrer Maße so dimensioniert sind, dass sie anstelle der herkömmlichen Stoßdämpfer alleinstehend oder im Federbein integriert, geeignet sind,
b) einem Hydraulikaggregat,
c) einem hydraulischen Steuerblock und
d) einer hydraulischen Schaltung, umfassend zwei 3/2-Wege Kugelhähne, einen hydraulischen Federspeicher, ein einstellbares Drosselrückschlagventil für die Druckstufe und ein einstellbares Drosselrückschlagventil für die Zugstufe sowie
e) Sensoren zur Ermittlung der Lagedaten der Längs- und Querachse sowie der Stellung der einzelnen Radaufhängungen und einer
f) Datenverarbeitungseinheit zur koordinierten Steuerung der Aktuatoren und einer
g) Projektionseinrichtung zur koordinierten, audiovisuellen Darstellung einer Fahrsimulation entsprechend der Steuerung und Stellung der Aktuatoren sowie einer
h) Projektionsfläche
i) einer Bedieneinheit
j) einem Stereo oder Surround Audio System
wobei die Aktuatoren mit der hydraulischen Schaltung und dem hydraulischen Steuerblock mit dem Hydraulikaggregat verbunden sind, wobei der Aktuator und die hydraulischen Schaltung geeignet sind, die herkömmlichen Stoßdämpfer im regulären Fahrbetrieb zu ersetzen und bei einer Fahrsimulation entsprechende Bewegungen des Fahrzeugs zu bewerkstelligen und der Federspeicher in seinen Abmessungen und Vorspannungsdruck so ausgelegt ist, dass er das durch die sich in der oberen Zylinderkammer befindliche Kolbenstange verdrängte Ölvolumen beim Einfedern aufnehmen und durch den Gasdruck wieder abgeben kann, wobei der größte Durchmesser der einstellbaren Drosselrückschlagventile für Zug und Druckstufe des Federspeichers so gewählt ist, dass durch Drehen der Stellschrauben die Dämpfung unabhängig derart einstellbar ist, dass sie dem Dämpfungsverhalten der herkömmlichen Stoßdämpfer entspricht und wobei durch Umlegen der 3/2-Wege Kugelhähne die Umschaltung zwischen Simulationsbetrieb und Fahrbetrieb erfolgt.
Ein erfindungsgemäßer Fahrsimulator schafft demnach eine virtuelle Fahrsimulation in einem realen Fahrzeug, wobei das System auf einfache Weise in ein fahrbereites oder nicht fahrbereites Fahrzeug integriert und dort installiert werden kann. Dem Benutzer wird in einem tatsächlichen Fahrzeug, möglicherweise in seinem eigenen Fahrzeug, ein nahezu realistisches Fahrverhalten des Fahrzeugs realisiert, da sich das Fahrzeug selbst im Rahmen der computergesteuerten Simulation bewegt wie bei richtigen Fahrsituationen. Die Bewegungen des Fahrzeugs werden über die Hydraulikzylinder ausgelöst, die bezüglich ihrer Maße so dimensioniert sind, dass sie anstelle der herkömmlichen Stoßdämpfer geeignet sind.

Die Stoßdämpfer können im Federbein integriert sein oder aber von diesem separiert allein stehend. Die Hydraulikzylinder sind mit einer hydraulischen Schaltung und einem hydraulischen Steuerblock mit dem Hydraulikaggregat zur Veränderung der Stellung der einzelnen Hydraulikzylinder verbunden. Die hydraulische Schaltung wiederum besteht pro Radaufhängung aus zwei 3/2-Wege Kugelhähnen oder elektromagnetischen Venti len/Schaltungen, einem hydraulischen Federspeicher und zweier einstellbaren Drosselrückschlagventilen.

Der Federspeicher ist in seinen Abmessungen und Vorspannungsdruck so ausgelegt, dass er das durch die sich in der oberen Zylinderkammer befindliche Kolbenstange verdrängte Ölvolumen beim Einfedern aufnehmen und durch den Gasdruck wieder abgeben kann. Dabei ist der größte Durchmesser der einstellbaren Drosselrückschlagventile für Druck und Zugstufe des Federspeichers so gewählt ist, das durch Drehen der Stellräder die Dämpfung derart einstellbar ist, dass sie dem Dämpfungsverhalten der originalen Stoßdämpfer entspricht. Besonderes Kennzeichen ist, dass die Hydraulikzylinder und die hydraulische Schaltung dazu geeignet sind, die herkömmlichen Stoßdämpfer im regulären Fahrbetrieb zu ersetzen und bei einer Fahrsimulation entsprechende Bewegungen des Fahrzeuges zu bewerkstelligen. Dies bedeutet, dass das Fahrzeug, ausgerüstet mit den Hydraulikzylindern entsprechend der Erfindung, auch im regulären Straßenbetrieb einsetzbar ist. Bei nicht fahrbereiten Fahrzeugen, kann die Dämpfungsschaltung (30), weil diese nur für die Fahrsicherheit und den Fahrkomfort notwendig ist, entfallen.

Die Fahrsimulation wird über ein Datenverarbeitungseinrichtung, beispielsweise einen PC oder ein Notebook gesteuert.

Alle Bestandteile und Apparate des erfindungsgemäßen Systems für die Fahrsimulation sind so dimensioniert, dass sie in dem jeweils verwendeten Fahrzeug selbst (mit)transportabel sind. Dies ist ein außergewöhnliches Merkmal, denn herkömmliche Simulatoren bestehen aus umfangreichen apparativen Einrichtungen, die in der Regel gesondert, z.B. in einem eigenen Transporter transportiert werden müssen. Bei nicht fahrbereiten Fahrzeugen kann man nach Entfernen des Motors und des Getriebes, das Hydraulikaggregat im geräuschgedämmt im Motorraum unterbringen. Dies bieten den Vorteil, dass man das Ausladen und Anschließen des Hydraulischen Aggregats einspart.

Die virtuelle Fahrsimulation wird dem Bediener auf einer Projektionsfläche direkt auf der Frontscheibe dargestellt. Der zur Darstellung der Fahrsimulation notwendige Projektor wird hierzu mittels Klettband auf einer klappbaren Halterung montiert ist. Die klappbare Halterung selbst wird mit Saugnäpfen an der Heckscheibe befestigt. Die Einstellung der Höhe des projizierten Bildes und der Bildlage wird mittels der klappbaren Halterung und dortiger Stellmuttern realisiert. Durch die Ausnutzung der am weitesten von der Frontscheibe entfernten Montagemöglichkeit für den Projektor erreicht man den Vorteil einer größtmöglichen Bilddiagonale für handelsübliche transportable Datenprojektoren.

Die Projektionsfläche ist direkt auf der Frontscheibe angeordnet oder enthält eine abnehmbare Abdeckung direkt auf der Frontscheibe. Die Projektionsfläche weist auf der Innenseite eine reflektierende Beschichtung aufweist und auf der Außenseite eine lichtundurchlässigen Schicht.

Das Hydraulikaggregat besteht aus einem skalierbaren System von einzelnen, mittels montierbarer Druckleitungen hintereinander geschalteten Behältern. Die Druckleitungen zur Verbindung der hintereinander geschalteten Behälter sind mit Schnellverschlüssen versehen. Auch das Hydraulikaggregat ist transportabel ausgelegt und kann im eigenen Fahrzeug mittransportiert werden. Dies bietet den Vorteil je nach Einsatzdauer des Simulators das Ölvolumen des Tanks und somit die notwendige Kühlung auf den Einsatz anpassen zu können.

Das erfindungsgemäße System ist geeignet für beliebige fahrbereite Fahrzeuge.

Audioeffekte in Stereo oder Surroundqualität werden über externe Lautsprecher realisiert, die wiederum in dem verwendeten Fahrzeug transportabel sind oder aber es werden die KFZ eigenen Lautsprecher verwendet.

Ferner sieht die Erfindung folgerichtig ein System zur Fahrsimulation in einem fahrbereiten oder nicht fahrbereiten Kraftfahrzeug vor, bestehend aus
a. einem doppelt wirkenden hydraulischen Aktuator pro Radaufhängung, wobei die Aktuatoren bezüglich ihrer Maße so dimensioniert sind, dass sie anstelle der herkömmlichen Stoßdämpfer alleinstehend oder im Federbein integriert, geeignet sind,
b) einem Hydraulikaggregat,
c) einem hydraulischen Steuerblock und
d) einer hydraulischen Schaltung, umfassend zwei 3/2-Wege Kugelhähne, einen hydraulischen Federspeicher, ein einstellbares Drosselrückschlagventil für die Druckstufe und ein einstellbares Drosselrückschlagventil für die Zugstufe sowie
e) Sensoren zur Ermittlung der Lagedaten der Längs- und Querachse sowie der Stellung der einzelnen Radaufhängungen (2.4) und einer
f) Datenverarbeitungseinheit zur koordinierten Steuerung der Aktuatoren und einer
g) Projektionseinrichtung zur koordinierten, audiovisuellen Darstellung einer Fahrsimulation entsprechend der Steuerung und Stellung der Aktuatoren sowie einer
h) Projektionsfläche,
i) einer Bedieneinheit,
j) einem Stereo oder Surround Audio System
welches komplett in dem fahrbereiten Fahrzeug mitführbar und installierbar ist. Die einzelnen Komponenten und Ausführungen entsprechen den bereits oben wiedergegebenen Funktionalitäten und Anordnungen.

Darüber hinaus sieht die Erfindung einen Datenträger als Teil einer Datenverarbeitungseinrichtung eines Systems zur Fahrsimulation vor, welches eine Software zur koordinierten Steuerung der hydraulischen Elemente des mobilen Systems und der Projektion umfasst.

Weiterhin sieht die Erfindung ein Dämpfungs- und Federungselement als Ersatz für einen fahrzeugspezifischen Stoßdämpfer vor, welches pro Radaufhängung aus einem Hydraulikzylinder mit einer hydraulischen Schaltung aus zwei 3/2-Wege Kugelhähnen, einem hydraulischen Federspeicher und zwei unabhängig einstellbaren Drosselrückschlagventilen besteht. Der Federspeicher ist dabei in seinen Abmessungen und Vorspannungsdruck so ausgelegt ist, dass er das durch die sich in der oberen Zylinderkammer befindliche Kolbenstange verdrängte Ölvolumen beim Einfedern aufnehmen und durch den Gasdruck wieder abgeben kann. Das Dämpfungs- und Federungselement ist über einen hydraulischen Steuerblock mit dem Hydraulikaggregat zur Veränderung der Stellung der einzelnen Hydraulikzylinder verbunden und der größte Durchmesser einer einstellbaren Drossel des Federspeichers ist so gewählt, das durch Drehen eines Stellrades die Dämpfung derart einstellbar ist, dass sie dem Dämpfungsverhalten eines herkömmlichen Stoßdämpfers entspricht. Das Dämpfungs- und Federungselement ist dazu geeignet, im Fahrbetrieb als Ersatz für einen originalen, resp. herkömmlichen Stoßdämpfer zu dienen und gleichzeitig auch zum Einsatz in einem erfindungsgemäßen Fahrsimulator.

Die Bedieneinheit hat den Vorteil, dass sie sehr praktisch im KFZ selbst (im Unterschied zu herkömmlichen Fahrsimulatoren) in einer typischen KFZ-Box, z.B. einer "Kruschtlbox" wie Aschenbecher etc. untergebracht werden kann und durch Touchpad, beleuchtete Tasten etc. praktisch und einfach zu bedienen ist. Über ein Schwenksystem kann es einfach montiert und zugänglich gemacht werden. Es ist leicht verhüllbar, wegsteckbar und garantiert einen schnellen Zugriff.

Ein Vorteil der Erfindung besteht auch darin, dass ein solches System zahlreichen Verwendungen offen steht, wie beispielsweise Forschung und Entwicklung, Fahrtraining, Unterhaltungszwecke sowie als Anschauungsmittel zur Darstellung komplexerer Sachverhalte im Automotive Bereich. Das System kann auch als Bewegungssystem zur Verfügung stehen, wodurch die Nutzung konventioneller PKWs als Fahrsimulator ermöglicht wird.

Gegenüber der DE 10211844 zum Beispiel hat diese Lösung den Vorteil, das es auch Beschleunigungen in der Z-Achse (auf/ab) glaubhaft darstellen kann, was bei der Simulation von Bodenverhältnissen zum Tragen kommt.

Obwohl die Komponenten, hydraulischer Antrieb, durch hydraulische Aktuatoren ersetzte Stoßdämpfer auch in sogenannten "Lowridern" zum Einsatz kommen, bietet diese Technik unter der Verwendung von doppelt wirkenden Hydraulikzylindern mit Wegaufnehmern in Verbindung mit Proportionalventilen den Vorteil einer genau kontrollierten Bewegung. Lowrider werden mit Schaltventilen angesteuert und kennen nur die Funktionen Durchfluss oder gesperrt. Dadurch ist zum Beispiel ein sanftes Anfahren einer neuen gewünschten Position, ein schnelles Verfahren in die Nähe der Sollposition und eine angepasste Verzögerung auf den Stillstand hin unmöglich. Die dynamische Proportionalsteuerung bietet weiterhin den Vorteil, besser auf die aus der Simulation gewonnenen Signale einzugehen. So schafft es nur die dynamische Proportionalsteuerung auf einen fühlbaren Unterschied zwischen dem Effekt, mit 100 Km/h über einen Randstein oder gegen eine Mauer gefahren zu sein glaubhaft darzustellen.

Da dieses System echte fahrbereite oder nicht fahrbereite Fahrzeuge benutzt, entsteht ein weiterer Vorteil: Ob es im Fahrschulbereich oder im Entertainment eingesetzt wird, bietet es immer die das Gefühl in einem echten Kraftfahrzeug und nicht in einer Attrappe zu sitzen.

Gegenüber in der DE 3744631C2 beschriebene Vorrichtung, steht dieses System auf seinen eigenen Reifen und kann die Fahrdynamiken im Fahrzeug darstellen. Damit können aufwendige Maschinen und Unterbauten entfallen.

Die Verwendung von Komponenten der Industriehydraulik bietet den großen Vorteil auch die mit hydraulischen Lenkhilfen (Servo Lenkung) ausgestatteten Fahrzeugen zum Simulator zu verwandeln. Da es selbst mit unter den gelenkten Rädern untergelegten Drehtellern -beschrieben in DE 199 28 490 A1- ist es bei einer Servo Lenkung nicht möglich das Lenkrad ohne erhebliche Kraftanstrengung zu betätigen. Durch die Verwendung von Druckbegrenzungsventilen ist es jedoch möglich die interne Servolenkung des Fahrzeugs mit einem auf das Lenksystem angepassten, vom Hersteller vorgegebenen Arbeitsdruck zu versorgen. Somit wird ermöglicht, im Stillstand und ohne laufendem Motor den Simulator ohne Kraftanstrengung zu lenken. Das Ansprechen der Servolenkung durch eine elektronisch gesteuerte externe Versorgung bietet einen weiteren Vorteil: Man kann durch die Verwendung einer kostengünstigen Schaltung die Lenkunterstützung in eine hydraulische Kraftrückmeldung -auch unter dem Namen Force Feedback bekannt- verwandeln. Die Kraftrückmeldung ist eine Mensch- Simulation Schnittstelle, welche versucht mehr Realismus (befahrener Untergrund, Kontaktverlust, durchdrehende Räder, Kollisionen) über das Lenkrad auf den Mensch zu übertragen. Viele im Markt befindliche Computerlenkräder sind eigentlich Spielzeuge und für den Simulationsbetrieb nicht rigide genug. Trotzdem bieten einige von ihnen eine Steuerungstechnologie mittels PWM Signalen bei +-6 bis +-24V Spannung für die Ansteuerung von Elektromotoren welche für den Simulationsbetrieb zu schwach wären. Diese Ansteuerung kann aber auch für die Regelung von Proportionalventilen und Proportionaldruckminderventilen verwendet werden. Diese Ventile können entweder direkt auf die Fahrzeug interne Servoanlage wirken, oder auf einen doppelt wirkenden Gleichgangzylinder geleitet werden, der mit seinen beiden Kolbenstangen über einen Federmechanismus auf die linke und rechte Spurstange wirkt. Der Federmechanismus erlaubt das Lenken in einem sonst starren hydraulischen System und arbeitet als der eigentliche Überbringer der Lenkgegenkräfte auf das Lenkgetriebe. Der Vorteil eines solchen Systems wären die weit stärkeren Gegenreaktionen wie schütteln, vibrieren oder der Zug des Lenkrades auf eine Straßenseite.

Ein weiterer Vorteil entsteht durch die Verwendung der Frontscheiben Projektion in Verbindung mit der Wiedergabe der Audiodaten in Stereo oder Surround Qualität. Landschaftsobjekte, vorausfahrende oder entgegenkommende Fahrzeuge werden auf der Frontscheibe nahezu lebensgroß dargestellt, ohne von Außen gesehen, die Kontur des Fahrzeuges zu verändern oder den Platzbedarf von Projektionsleinwänden zu beanspruchen.

Das Stereo- oder Surround Audiosystem erlaubt eine bessere Lokalisierung der Umgebungsgeräusche wie zum Beispiel wie die Geräusche eines Motorrades, welches rechts hinter dem Simulationsfahrzeug zum halten kommt.

Durch die so verbesserte fühlbare, grafische und klangliche Qualität der Simulation löst ein weiteres bekanntes Problem in der Simulationstechnik, in dem es dem Menschen erlaubt, mehr in die Simulation einzutauchen und somit ein besseres Gefühl für die Distanz zu Objekten und Hindernissen, der tatsächlich gefahrenen Geschwindigkeit und dem aktuellen Zustand der Fahrsicherheit -wie den Verlust der Bodenhaftung- zu bekommen. Der Einsatz von sogenannten HMD's (Head Mounted Displays) ist zwar denkbar, bringen aber bei den zu erwartenden häufigen Fahrerwechsel, organisatorische und hygienische Probleme mit sich.

Dadurch, dass der Simulator auf seinen eigenen Reifen steht, ergibt sich ein weiterer Vorteil: Er kann zum Einsatzort gefahren oder gerollt werden und muss nicht verankert werden. Es ist dem Aufsteller überlassen, ob er den Luftdruck in den Reifen des Simulators für straffere und schnellere Bewegungen anhebt, oder er die Dynamik mit einem niedrigeren Reifendruck eher komfortabel wählt. Eventuell durch den Untergrund des Aufstellungsortes entstehende Restriktionen (unversiegelter Naturstein) können durch die Unterlage von silikonhaltigen Platten (die legendären Fackelmann Schneidebrettchen) oder die Verwendung von einfachem Teppich in Einwegqualität, genüge getan werden.

Weiterhin bietet das System den enormen Vorteil in jedem Fahrzeug einsetzbar zu sein, welches zwischen dem Untergrund und dem Chassis ein Dämpfungssystem aufweist. Dies können unter anderem Flugzeuge, Motorräder, speziell All Terrain Vehicles, auch als Quad Bikes bekannt, Anhänger, Nutzfahrzeuge und Kettenfahrzeuge sein.

Die Adaptertechnik hat den enormen Vorteil die Umrüstungszeiten von einer Fahrzeugmarke als Simulationsfahrzeug auf eine andere noch weiter zu senken. Somit kann man viel mehr auf die einzelnen Hersteller eingehen und damit das System viel besser auslasten. Dadurch, dass der Adapter transportabel ist, kann er auch das Simulationsfahrzeug mobil von A nach B transportieren.

Der Adapter bietet auch die Möglichkeit als Testplattform für Zulieferbetriebe in der Automobil Industrie Verwendung zu finden. Da es eine preisgünstige, raumsparende Testeinrichtung ist, können Transfers von Prototypen vom Zulieferer zum Hersteller reduziert werden und dazu zur Verminderung des Erlkönig Effektes beitragen.

Weitere vorteilhafte Maßnahmen sind in den übrigen Unteransprüchen enthalten. Die Erfindung ist in den anliegenden Zeichnungen dargestellt und wird nachfolgend näher beschrieben. Es zeigt:
- **Figur 1**: einen Längsschnitt durch einen erfindungsgemäßen Simulator;
- **Figur 2**: zeigt eine vereinfachte Ansicht des virtuellen Fahrzeuges innerhalb einer Simulation;
- **Figur 3, 4, 5**: als Beispiel die Radaufhängung des Simulators in Ruhestellung und in aktivem Zustand;
- **Figur 6, 7, 8**: die Hydraulik der Radaufhängungen in unterschiedlichen Positionen und Situationen;
- **Figur 9**: den Programmablauf im Mikrocontroller der Steuereinheit;
- **Figur 10**: schematisch eine Innenansicht des Fahrzeugs nach der Figur1, insbesondere das Bedienpult aus der Figur 1.

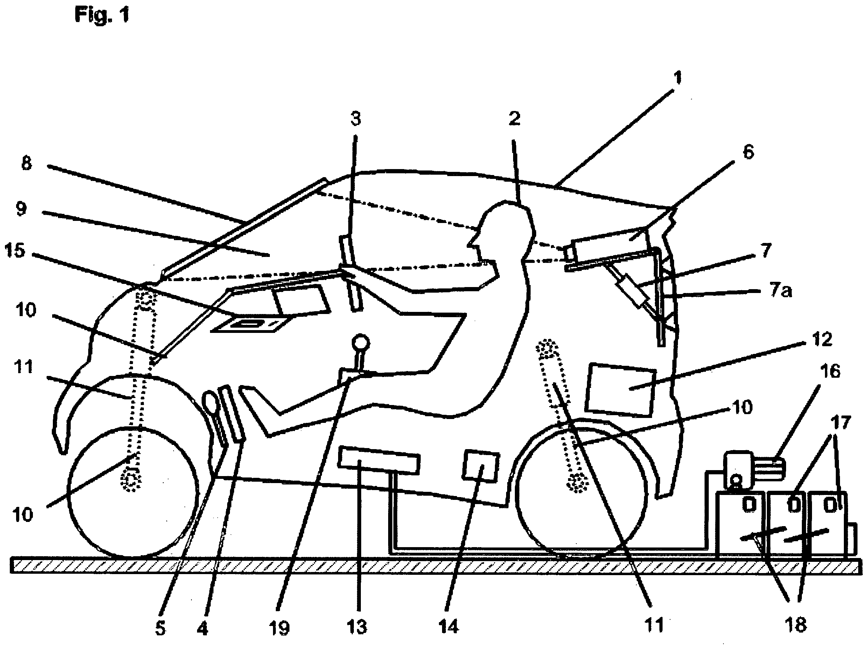

Fig.1 zeigt eine vereinfachte Schnittdarstellung des Simulators 1. Der Bediener 2 steuert durch die Bedienung der Gas- und Bremspedale 4 und 5 sowie der Schaltung 19 und des Lenkrades 3 ein Fahrzeug als virtuelles Fahrzeug innerhalb einer Simulation welche auf dem an Bord befindlichen PC-System 12 abläuft. Hinter dem Bediener 2 ist ein Projektor 6 platziert, der über Stellmuttern 7 und Halterungen 7a klappbar angeordnet ist. Der Strahlengang 9 des Projektors 6 projiziert das Bild des Projektors 6 auf die Innenseite der Frontscheibe des realen Fahrzeugs, die zu diesem Zweck mit einer abnehmbaren Abdeckung 8 abgedeckt ist. Das Lenkrad, der Schalthebel und die Pedale sind mit Wegaufnehmer-Sensoren 10 ausgerüstet, welche die Ist-Positionen und die Schaltkommandos an die Simulation melden. Außerhalb vom Fahrzeug ist das hydraulische Aggregat 16, zusammen mit den Druckleitungen und dazugehörigen Behältern 17, 17 angeordnet. Diese sind mit einem hydraulischen Steuerblock 13 im Innern des Fahrzeugs verbunden; ein Controller 14 kontrolliert und steuert die Simulation, die vom Bediener am Bedienerpult 15 ausgelöst und verwaltet wird, wobei diese Simulation zu realen Bewegungen des Fahrzeugs führt, die über hydraulische Aktuatoren 10 und korrespondierende Wegmesssensoren 11 in Verbindung mit dem PC-System, dem hydraulischen Steuerblock u. a. zur Visualisierung der Simulation durch den Projektor führen.

Fig. 1 zeigt mithin eine vereinfachte Seitenansicht des realen Fahrzeugs bei der Fahrsimulation. Der Fahrer des Simulators verfolgt die Simulation mittels einer Projektion, welche von dem an Bord befindlichen Projektor 6, der auf einer mit Saugnäpfen an die Heckscheibe befestigten, klappbaren Halterung 7 mittels Klettband montiert ist. Zwei Stellmuttern 7a erlauben die Einstellung der Höhe des Bildes und der Bildlage. Der Projektor strahlt zwischen Fahrer und Beifahrersitz hindurch (9) direkt auf die Frontscheibe, welche mit einer abnehmbaren Abdeckung 8 versehen worden ist, die auf der Innenseite eine reflektierende Beschichtung aufweist und auf der Außenseite lichtundurchlässig beschichtet ist. Die durch die schräge Projektionsfläche der Windschutzscheibe hervorgerufenen Verzerrungen der Projektion werden durch die Trapez Korrektur von modernen Projektoren ausgeglichen.

Ein hydraulisches Aggregat 16, dessen Abmessung so gewählt ist, dass es im Fahrzeug transportiert werden kann, sorgt für den Antrieb des Simulators. Zweckgemäß ist der normale Ölbehälter gegen ein skalierbares System von einzelnen mittels schnell montierbaren Druckleitungen 18 hintereinander geschalteten Behältern 17 ausgetauscht worden. Diese Lösung erlaubt ein einfaches Ein- und Ausladen der normalerweise schweren Komponenten.

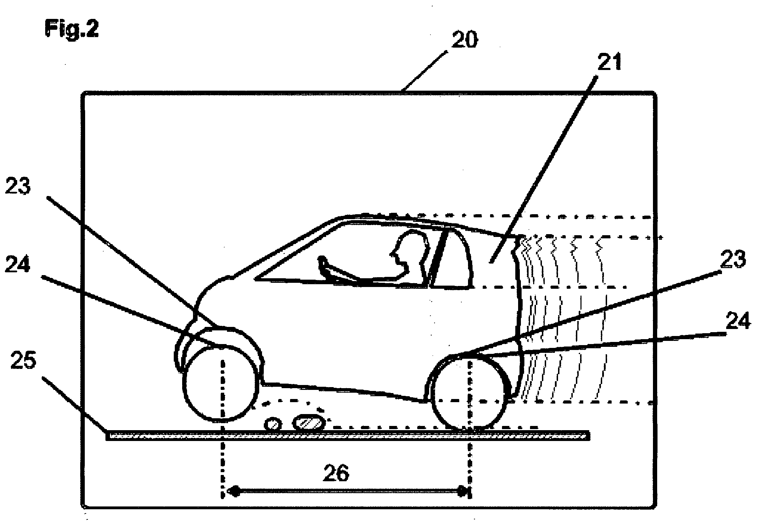

Fig.2 zeigt eine vereinfachte Ansicht des virtuellen Fahrzeuges innerhalb der Simulation 20. Das virtuelle Fahrzeug ist ein maßstäbliches Abbild des Fahrzeugs, das den Fahrsimulator darstellt. In den Datentabellen des virtuellen Fahrzeuges können Daten wie Fahrzeugmasse, Schwerpunktslage, Achslasten, Achsabstände 26, Spurbreite, Reifenradius, Reifenbreite, Federweg ein- und ausgefahren, Dämpfungsgrad und Federhärte festgelegt werden. In dem Computermodel des virtuellen Fahrzeugs befinden sich Messpunkte 23 für die absolute Lage des Fahrzeugs in der Längsachse X und der Querachse Y. Zusätzlich wird an weiteren Messpunkten 24 laufend die Distanz zwischen Radhaus und Reifen gemessen.

Dem Computermodel 21 des virtuellen Fahrzeugs widerfahren im Rahmen der Simulation durch die vom Fahrer 2 verursachte Lenklage, Geschwindigkeit und Richtung und aus der Simulation gewonnenen Umgebungseinflüsse wie Untergrund 25, Fahrzeuglage, physikalische Wirkungen. Diese Wirkungen zeigen sich am Computermodell durch die Veränderung von Fahrzeuglage (z.B. Lastwechselreaktionen) Querbeschleunigungen durch Masseträgheit bei Kurvenfahrten und durch das ansprechen der Federung des virtuellen Fahrzeugs.

Diese Positionsdaten werden durch einen Controller 14 ausgewertet und in Form von Positionierungskommandos an den hydraulischen Steuerblock 13 gegeben. Der Controller überprüft mittels Wegaufnehmer Sensoren 11 die Ist-Position einer jeden Radaufhängung mit der von der Simulation wiedergegebenen Position.

Sobald eine Differenz zwischen Ist- und Sollposition eines jeden Radabstandes auftritt gibt der Controller entsprechende Positionierungskommandos an die Ventileinheiten, welche die hydraulischen Aktuatoren 10 an den vier Radaufhängungen ansprechen um die geforderte Position zu erreichen. Im Falle der in Fig. 2 dargestellten Lage, müssten die Vorderräder des Simulators ausgefahren und die Hinterräder eingefahren werden.

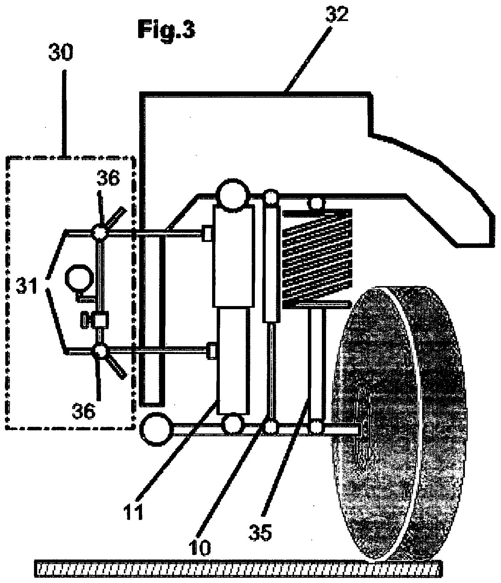

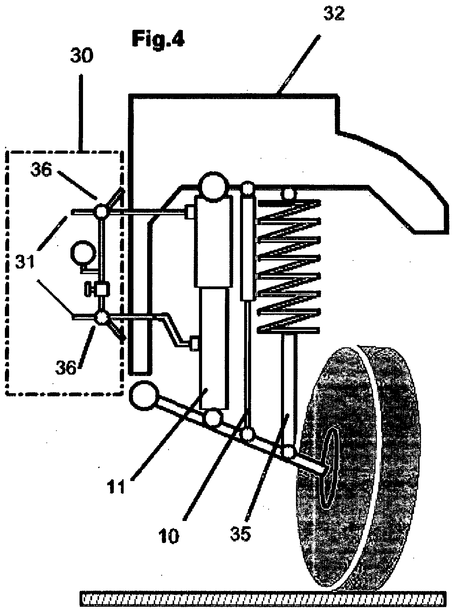

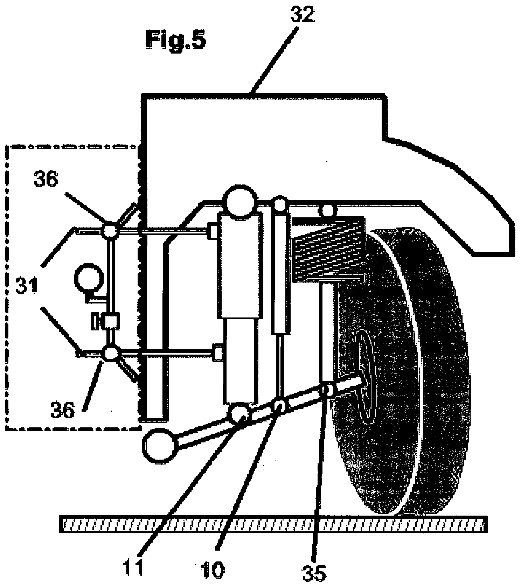

Fig. 3 beschreibt als Beispiel die linke vordere Radaufhängung des Simulators mit der hydraulischen Dämpfungsschaltung 30, dem Chassis 32, dem hydraulischen Aktuator 10, dem Wegmesssensor 11 und der Spiralfeder 35 zur Federung der Aufhängung. Die Radaufhängung 33, 34 ist in Ruhestellung, an den Anschlüssen 31 (mit entsprechenden Ventilen 36) liegt kein Druck an. Fig. 4 beschreibt die vom Computermodell geforderte und vom Simulator eingenommene Lage der vorderen, linken Radaufhängung. Fig. 5 beschreibt die vom Computermodell geforderte und vom Simulator eingenommene Lage der hinteren, linken Radaufhängung. Das Rad 33, die Spiralfeder 35, die Achse 34, der hydraulischen Aktuator 10 und die Wegmesssensoren 11 sind bei diesen Positionen von ihrer Ruhestellung unterschiedlich.

Neben den im Simulationsbetrieb wichtigen Eigenschaften des Simulators spielt auch die Mobilität und die Verkehrssicherheit eine wichtige Rolle. Weil die Integration von hydraulischen Zylindern in der Radaufhängung den Verlust der Dämpfung nach sich ziehen würde, ist hier eine technische Lösung notwendig.

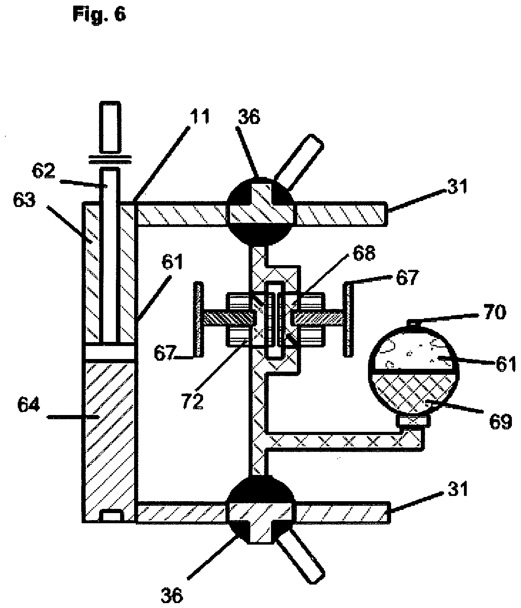

Die in Fig. 6 beschriebene Schaltung zeigt den Hydraulikzylinder 61 in einer der Radaufhängungen, zwei 3/2-Wege Kugelhähne 36 zur Entkopplung des Hydraulikzylinder vom Simulationsbetrieb, einen Federspeicher 69 zur Aufnahme des im Falle aus dem unteren Zylinderraum 64 in den oberen Zylinderraum 63 verdrängenden Volumens wegen dem Verdrängungsvolumens der Kolbenstange 62 nicht unterzubringenden Hydraulikflüssigkeit. Der Gasbalg 70 des Federspeichers ist mit einem Gasdruck vorgespannt, wie er auch im vormalig eingebauten Stoßdämpfer herrscht. Sobald preislich attraktiv kann man anstelle der 3/2-Wege Kugelhähne auch an den Einsatz von elektrischen Schaltventilen denken. Ein weiteres Merkmal dieser Schaltung sind zwei unabhängig von einander einstellbare Drosselrückschlagventile 68, 72 mittels dessen Stellschrauben 67 die Durchflussgeschwindigkeit des Ölstroms für die Zug- und Druckstufe in der Rohrleitung geregelt werden kann. Die in den Drosselrückschlagventilen befindlichen Drosselklappen lassen einen Ölstrom nur jeweils in eine Richtung zu. So lässt das Drosselrückschlagventil 68 nur einen Ölfluss von der unteren Zylinderkammer zur oberen Zylinderkammer zu und verriegelt in die entgegen gesetzte Richtung. Das Drosselrückschlagventil 72 lässt nur einen Ölfluss von der oberen Zylinderkammer zur unteren Zylinderkammer zu und verriegelt in die entgegen gesetzte Richtung. Die Auslegung des maximalen Durchmessers der Durchflussöffnung geschieht wieder in Abhängigkeit zum originalen Stoßdämpfer. Weiterhin sind die hydraulischen Zuleitungen 66 vom Schaltventil abgebildet.

Die Stellung der beiden Kugelhähne in Fig.6 ist auf Simulationsbetrieb gestellt. Durch die Anschlüsse 66 kann der Hydraulikzylinder wie von der Simulation vorgegeben, angesteuert werden. Die Drosselrückschlagventile 68, 72 und der Federspeicher sind von der restlichen Schaltung abgetrennt Durch die Betätigung eines Wegeventils kann nun die obere Kammer 63 oder die untere Kammer 64 des Hydraulikzylinders mit Druck beaufschlagt werden, was ein Einfahren bzw. Ausfahren der Radaufhängung auslöst.

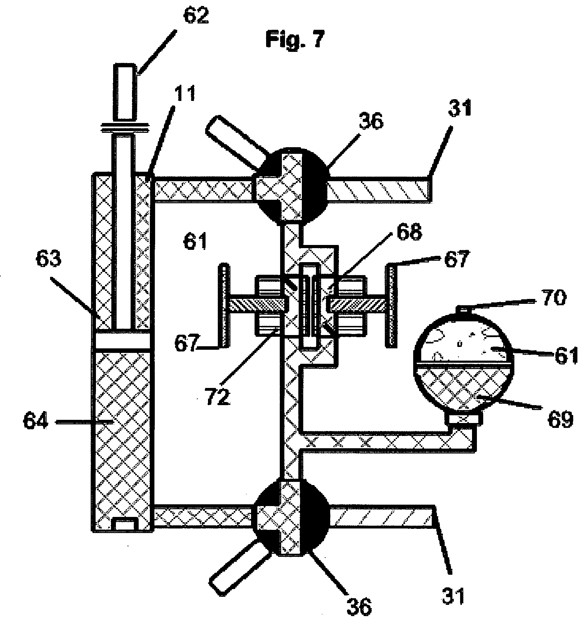

Fig. 7 zeigt die Schaltung im Fahrmodus nach beendeter Simulation. Der Hydraulikzylinder 61 ist aufgrund der Federkräfte und Leckage in seine Mittelstellung zurückgekehrt oder durch entsprechende Positionierungskommandos in diese Lage gebracht worden. Aufgrund der Leckage ist das Druckverhältnis zwischen der oberen und der unteren Zylinderkammer ausgeglichen. Wenn geschehen sind die 3/2-Wegehähne 65 in den Fahrbetrieb umgelegt worden. Die Zuleitungen 66 vom Wegeventil kommend sind getrennt und die obere und untere Kammer des Hydraulikzylinders sind kurzgeschlossen.

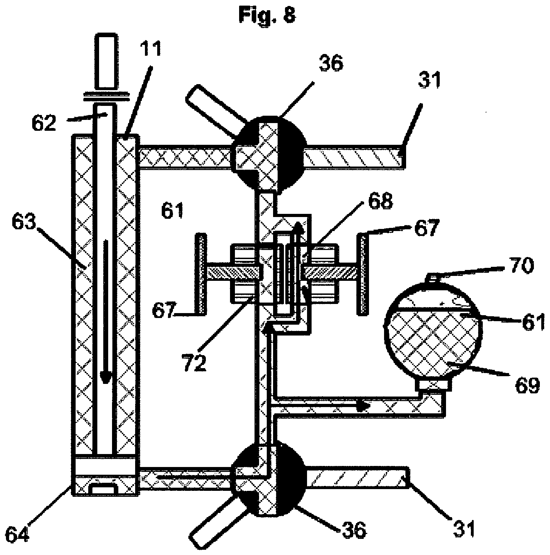

Fig. 8 beschreibt die Radaufhängung in ganz eingefahrener Lage. Das Aufgrund der Verdrängung der Kolbenstange 62 nicht mehr in die obere Kammer 63 passende Ölvolumen ist in den Speicher 69 geströmt. Diese Stellung entspräche einer extremen Fahrsituation, wie sie bei einer Vollbremsung an der vorderen Radaufhängung oder einer extremen Beschleunigung gemessen an der hinteren Radaufhängungen, vorkommen kann. Der maximale Querschnitt der Drosselrückschlagventile 68 und 72 wird ebenfalls dem maximalen Querschnitt der Durchlässe des jeweilig zu ersetzenden Stoßdämpfers gewählt. Durch das Eindrehen des Drosseleinstellrad 67, kann nun auf einem Stoßdämpferprüfstand die optimale Einstellung für die Zug- und Druckstufe ermittelt und fest eingestellt werden. Idealerweise sollte die Anordnung und Einbaulage der Komponenten so erfolgen, dass die Befüllöffnung des Druckspeichers 61 und die Einstellvorrichtung der Drosselrückschlagventile 67 und 72, für die Feinabstimmung leicht erreichbar sind.

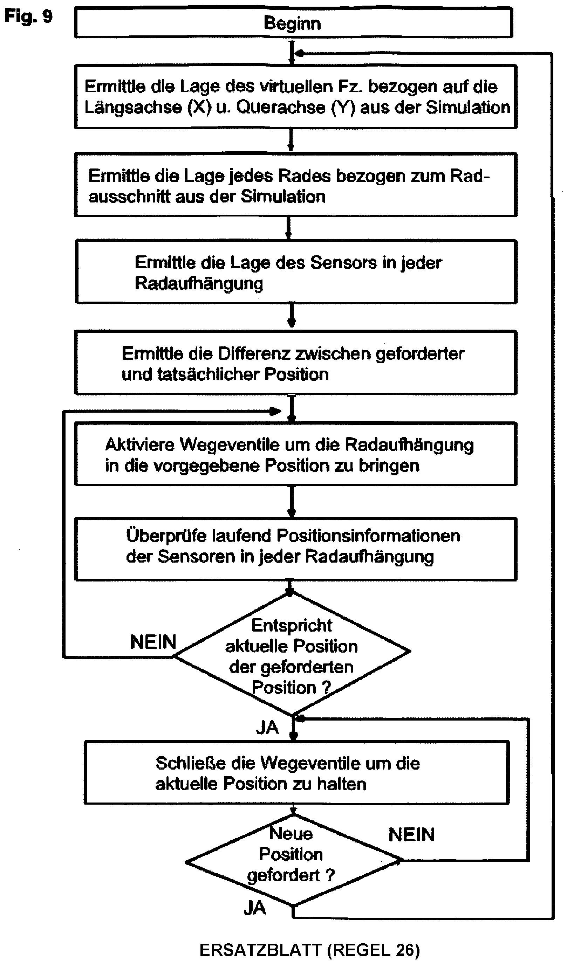

Fig. 9 beschreibt den Programmablauf im Mikrocontroller der Steuereinheit 14 und erscheint selbsterklärlich. Die dortigen Programmablaufbeschreibungen werden zum Gegenstand dieser Beschreibung gemacht.

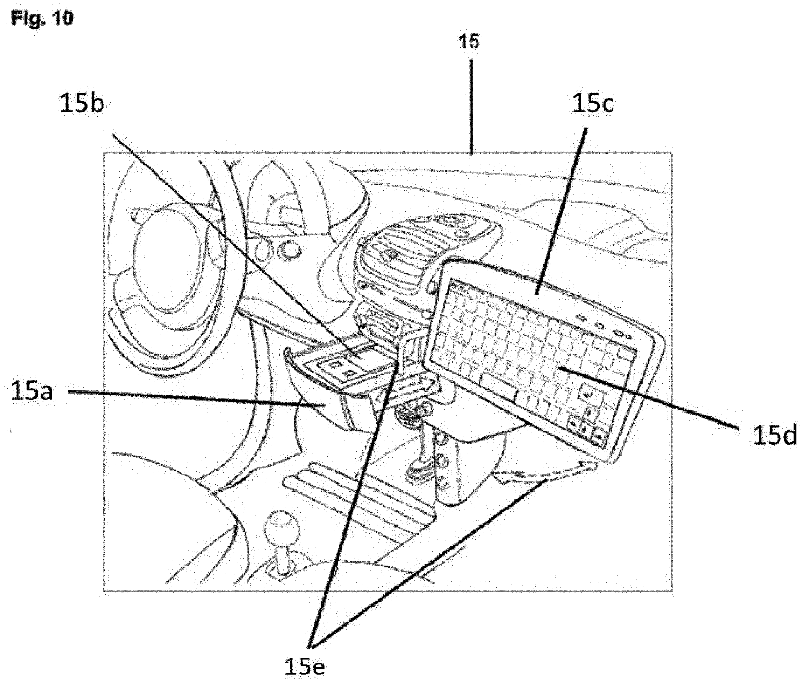

Fig. 10 zeigt schematisch eine Innenansicht des Fahrzeugs 1 nach der Figur 1, insbesondere das Bedienpult 15 aus der Figur 1. An einem beliebigen Ort im Fahrzeug, vorzugsweise jedoch beispielsweise in der ohnehin in jedem Fahrzeug vorhanden Box 15a in der Mittelkonsole (KFZ- übliches Aufbewahrungsfach, z.B. Aschenbecher, CD-Aufbewahrungseinheit oder ähnliches) ist die Eingabeeinheit für den mobilen Fahrsimulator angeordnet. Es weist ein integriertes Industrie-Touchpad 15b als Ersatz für das Maus-Eingabegerät auf und wird benötigt, um dem Fahrer die Kontrolle über den Simulator zu geben. Dadurch wird das Aufsichtspersonal entlastet oder sogar eingespart. Eine Kleintastatur 15c, mittels Klettband abnehmbar an einer Schwenkhalterung 15e angebracht dient der Eingabe von für die Simulation wichtigen Parametern; die Schwenkhalterung 15e ist in Halterahmen eingesteckt. Mit der Tastatur kann sich der Fahrer bei groben Fahrfehlern wieder zurück auf die Strecke bewegen, Ansichten wählen, oder zwischen Automatik- oder Schaltgetriebe wählen. Die Tastatur 15c weist hintergrundbeleuchtete Tasten 15d auf, um im abgedunkelten Innenraum bedienbar zu sein. Die gesamte Tastatur und Schwenkhalterung kann je nach Situation um 90° geschwenkt, oder durch herausziehen aus dem Halterahmen entfernt werden.

### Bezugszeichen

- 1: Simulator
- 2: Bediener
- 3: Lenkrad
- 4: Gaspedal
- 5: Bremspedal
- 6: Projektor
- 7: Stellmuttern
- 7a: klappbare Halterung
- 8: abnehmbare Abdeckung
- 9: Strahlengang des Projektors
- 10: hydraulische Aktuatoren
- 11: Wegmesssensoren
- 12: Datenverarbeitungssystem / PC-System
- 13: hydraulischer Steuerblock
- 14: Controller
- 15: Bedienerpult
15 a KFZ-Box
15 b Touchpad
15 c Kleinsttastatur
15 d hintergrundbeleuchtete Tasten
15 e Schwenkhalterung
- 16: hydraulisches Aggregat
- 17: Behälter
- 18: Druckleitung
- 19: Schaltung
- 20: Simulation
- 21: Computermodell
- 23: Messpunkte Radhaus
- 24: Messpunkte Reifen
- 25: Fahrbahnebene
- 26: Achsenabstand
- 30: Dämpfungsschaltung
- 31: Anschlüsse
- 32: Chassis
- 33: Rad
- 34: Achse
- 35: Spiralfeder
- 36: Ventile, 3/2-Wege Kugelhähne
- 61: Gasblase Federspeicher
- 62: Kolbenstange
- 63: oberer Zylinderraum
- 64: unterer Zylinderraum
- 61: hydraulische Zuleitungen (31)
- 62: Stellschraube
- 63: Drosselrückschlagventil Druckstufe
- 64: Federspeicher
- 65: Füllanschluss Gasspeicher
- 72: Drosselrückschlagventil Zugstufe

## Patentansprüche

1. System zur Fahrsimulation in einem Kraftfahrzeug, bestehend aus
a) einem doppelt wirkenden hydraulischen Aktuator (10) pro Radaufhängung, wobei die Aktuatoren (10) bezüglich ihrer Maße so dimensioniert sind, dass sie anstelle der herkömmlichen Stoßdämpfer alleinstehend oder im Federbein integriert, geeignet sind,
b) einem Hydraulikaggregat,
c) einem hydraulischen Steuerblock und
d) einer hydraulischen Schaltung (30), umfassend zwei 3/2-Wege Kugelhähne (36), einen hydraulischen Federspeicher (69), ein einstellbares Drosselrückschlagventil für die Druckstufe (68) und ein einstellbares Drosselrückschlagventil für die Zugstufe (72) sowie
e) Sensoren zur Ermittlung der Lagedaten der Längs- und Querachse sowie der Stellung der einzelnen Radaufhängungen (11) und einer
f) Datenverarbeitungseinheit (12) zur koordinierten Steuerung der Aktuatoren (10), und einer
g) Projektionseinrichtung (6, 7, 7a, 9) zur koordinierten, audiovisuellen Darstellung einer Fahrsimulation entsprechend der Steuerung und Stellung der Aktuatoren (10), sowie einer
h) Projektionsfläche,
i) einer Bedieneinheit (15),
j) einem Stereo oder Surround Audio System,
wobei die Aktuatoren (10) mit der hydraulischen Schaltung (30) und dem hydraulischen Steuerblock (13) mit dem Hydraulikaggregat (16) verbunden sind,
wobei der Aktuator (10) und die hydraulische Schaltung geeignet sind, die herkömmlichen Stoßdämpfer im regulären Fahrbetrieb zu ersetzen und bei einer Fahrsimulation entsprechende Bewegungen des Fahrzeugs zu bewerkstelligen und der Federspeicher in seinen Abmessungen und Vorspannungsdruck so ausgelegt ist, dass er das durch die sich in der oberen Zylinderkammer befindliche Kolbenstange verdrängte Ölvolumen beim Einfedern aufnehmen und durch den Gasdruck wieder abgeben kann, wobei der größte Durchmesser der einstellbaren Drosselrückschlagventile für Zug und Druckstufe des Federspeichers so gewählt ist, dass durch Drehen der Stellschrauben (67) die Dämpfung unabhängig derart einstellbar ist, dass sie dem Dämpfungsverhalten der herkömmlichen Stoßdämpfer entspricht und wobei durch Umlegen der 3/2-Wege Kugelhähne (36) die Umschaltung zwischen Simulationsbetrieb und Fahrbetrieb erfolgt.

2. System nach Anspruch 1, wobei es sich bei der die Datenverarbeitungseinrichtung (12) um einen PC oder ein Notebook handelt.

3. System nach Anspruch 1 oder 2, **dadurch gekennzeichnet, dass** die Bedieneinheit (15, 15b, 15c, 15d) im Wageninneren schwenkbar und abnehmbar (15e) montiert ist.

4. System nach einem oder mehreren der vorhergehenden Ansprüche, **dadurch gekennzeichnet, dass** der zu Darstellung der Fahrsimulation notwendige Projektor (6) mittels Klettband auf einer klappbaren Halterung (7) montiert ist, wobei die klappbare Halterung (7a) mit Saugnäpfen an der Heckscheibe befestigt ist.

5. System nach Anspruch 4, wobei die klappbare Halterung (7a) mittels Stellmuttern (7) die Einstellung der Höhe des projizierten Bildes und der Bildlage erlaubt.

6. System nach einem oder mehreren der vorhergehenden Ansprüche, welches eine Projektionsfläche direkt auf der Frontscheibe enthält oder eine abnehmbaren Abdeckung (8) direkt auf der Frontscheibe enthält.

7. System nach Anspruch 6, wobei die Projektionsfläche auf der Innenseite eine reflektierenden Beschichtung aufweist.

8. System nach Anspruch 6 oder 7, wobei die Projektionsfläche auf der Außenseite mit einer lichtundurchlässigen Schicht versehen ist.

9. System nach einem oder mehreren der vorhergehenden Ansprüche, **dadurch gekennzeichnet, dass** das Hydraulikaggregat (16) aus einem skalierbaren System von einzelnen, mittels montierbarer Druckleitungen (18) hintereinander geschalteten Behältern besteht.

10. System nach Anspruch 9, **dadurch gekennzeichnet, dass** die Druckleitungen zur Verbindung der hintereinander geschalteten Behälter mit Schnellverschlüssen (18) versehen sind.

11. System nach einem oder mehreren der vorhergehenden Ansprüche, wobei es sich bei den Mitteln zur Wiedergabe der Stereo oder Surround Audiodaten um externe Lautsprecher handelt oder wobei zur Wiedergabe von Audiodaten die in dem verwendeten Fahrzeug vorhandenen Lautsprecher verwendet werden.

## Claims

1. A system for driving simulation in a motor vehicle, consisting of
a) one double-acting hydraulic actuator (10) per wheel suspension, wherein said actuators (10) are dimensioned such that they are suitable for replacing the conventional shock absorbers, either as standalone components or integrated into the suspension strut,
b) a hydraulic unit,
c) a hydraulic control block and
d) a hydraulic circuit (30), comprising two 3/2-way ball valves (36), a hydraulic spring accumulator (69), an adjustable throttle check valve for the compression stage (68) and an adjustable throttle check valve for the rebound stage (72), as well as
e) sensors for determining the position data of the longitudinal and transverse axes and the position of the wheel suspensions (11), and a
f) data processing unit (12) for coordinated control of the actuators (10), and a
g) projection device (6, 7, 7a, 9) for coordinated audiovisual representation of a driving simulation in accordance with the control and position of the actuators (10), as well as a
h) projection surface,
i) a control unit (15),
j) a stereo or surround audio system,
wherein said actuators (10) are connected to the hydraulic unit (16) with said hydraulic circuit (30) and said hydraulic control block (13),
wherein said actuator (10) and said hydraulic circuit are suitable for replacing the conventional shock absorbers in regular driving operation and for producing respective movements of the vehicle in a driving simulation, and the dimensions and bias pressure of said spring accumulator are configured such that it can receive the oil volume displaced by the piston rod located in the upper cylinder chamber during compression and release it again by means of the gas pressure, wherein the greatest diameter of the adjustable throttle valves for the rebound and compression stages of the spring accumulator are selected such that the attenuation can independently be set by turning the adjusting screws (67) such that it corresponds to the attenuation behavior of the conventional shock absorbers, and wherein switching between simulation operation and driving operation is performed by reversing the 3/2-way ball valves (36).

2. The system according to claim 1, wherein the data processing device (12) is a PC or a notebook.

3. The system according to claim 1 or 2, **characterized in that** the control unit (15, 15b, 15c, 15d) is mounted pivotably and detachably (15e) in the vehicle interior.

4. The system according to one ore several of the preceding claims, **characterized in that** the projector (6) required for representing the driving simulation is mounted with velcro fastener tape onto a foldable holder (7), wherein the foldable holder (7a) is fastened with suction cups to the rear window.

5. The system according to claim 4, wherein said foldable holder (7a) allows adjusting the height of the projected image and the image position by means of adjusting screws (7).

6. The system according to one or several of the preceding claims, which system includes a projection surface directly on the windshield or includes a detachable cover (8) directly on the windshield.

7. The system according to claim 6, wherein said projection surface includes a reflective coating on its inner side.

8. The system according to claim 6 or 7, wherein said projection surface is provided with an opaque film on its outer side.

9. The system according to one or several of the preceding claims, **characterized in that** said hydraulic unit (16) consists of a scalable system of individual containers connected in series using mountable pressure lines (18).

10. The system according to claim 9, **characterized in that** said pressure lines are provided with snap closures (18) to connect the containers connected in series.

11. The system according to one or several of the preceding claims, wherein the means for replaying stereo or surround audio data are external speakers or wherein the existing speakers in the vehicle used are used for replaying the audio data.

## Revendications

1. Système de simulation de conduite dans un véhicule automobile, composé de
a) un actionneur hydraulique double effet (10) par suspension de roue, dans lequel les actionneurs (10) sont dimensionnés en ce qui concerne leurs dimensions de telle sorte qu'ils conviennent à la place des amortisseurs traditionnels seuls ou intégrés dans la jambe de suspension,
b) un groupe hydraulique,
c) un bloc de commande hydraulique, et
d) un circuit hydraulique (30), comprenant deux vannes à boisseau sphérique 3/2 voies (36), un accumulateur hydraulique à ressort (69), un clapet anti-retour réglable avec étranglement pour l'étage de compression (68) et un clapet anti-retour réglable avec étranglement pour l'étage de traction (72) ainsi que
e) des capteurs pour la détermination des données de position de l'axe longitudinal et transversal ainsi que de la position des suspensions de roue (11) individuelles et une
f) unité de traitement des données (12) pour la commande coordonnée des actionneurs (10), et un
g) équipement de projection (6, 7, 7a, 9) pour la représentation audiovisuelle coordonnée d'une simulation de conduite en fonction de la commande et de la position des actionneurs (10), ainsi qu'une
h) surface de projection,
i) une unité de commande (15),
j) un système audio stéréo ou ambiophonique,
dans lequel les actionneurs (10) sont reliés au circuit hydraulique (30) et au bloc de commande hydraulique (13) avec le groupe hydraulique (16), dans lequel l'actionneur (10) et le circuit hydraulique conviennent pour remplacer les amortisseurs traditionnels dans le mode de marche régulier et effectuer des mouvements correspondants du véhicule automobile lors d'une simulation de conduite et l'accumulateur à ressort est conçu du point de vue de ses dimensions et de la pression de précontrainte de telle sorte qu'il puisse absorber le volume d'huile refoulé par la tige de piston se trouvant dans la chambre de cylindre supérieure lors de l'enfoncement et le délivrer à nouveau par la pression de gaz, dans lequel le plus grand diamètre des clapets anti-retour réglables avec étranglement pour l'étage de traction et de compression de l'accumulateur à ressort est choisi de telle sorte que l'amortissement est réglable indépendamment par rotation des vis de réglage (67) de telle manière qu'il correspond au comportement d'amortissement des amortisseurs traditionnels et dans lequel la commutation entre le mode de simulation et le mode de marche se fait par basculement des vannes à boisseau sphérique 3/2 voies (36).

2. Système selon la revendication 1, dans lequel l'équipement de traitement des données (12) est un PC ou un ordinateur portable.

3. Système selon la revendication 1 ou 2, **caractérisé en ce que** l'unité de commande (15, 15b, 15c, 15d) est montée de manière pivotante et amovible (15e) à l'intérieur du véhicule.

4. Système selon une ou plusieurs des revendications précédentes, **caractérisé en ce que** le projecteur (6) nécessaire à la représentation de la simulation de conduite est monté sur un support pliable (7) au moyen d'une bande auto-agrippante, dans lequel le support pliable (7a) est fixé à la lunette arrière avec des ventouses.

5. Système selon la revendication 4, dans lequel le support pliable (7a) permet le réglage de la hauteur de l'image projetée et de la position de l'image au moyen d'écrous de réglage (7).

6. Système selon une ou plusieurs des revendications précédentes, lequel contient une surface de projection directement sur le pare-brise ou contient un recouvrement amovible (8) directement sur le pare-brise.

7. Système selon la revendication 6, dans lequel la surface de projection présente un revêtement réfléchissant sur la face intérieure.

8. Système selon la revendication 6 ou 7, dans lequel la surface de projection est dotée d'une couche opaque sur la face extérieure.

9. Système selon une ou plusieurs des revendications précédentes, **caractérisé en ce que** le groupe hydraulique (16) se compose d'un système adaptable de contenants individuels branchés l'un derrière l'autre au moyen de conduites de pression (18) pouvant être montées.

10. Système selon la revendication 9, **caractérisé en ce que** les conduites de pression sont dotées de fermetures rapides (18) pour la liaison des contenants branchés l'un derrière l'autre.

11. Système selon une ou plusieurs des revendications précédentes, dans lequel les moyens de restitution des données audio stéréo ou ambiophoniques sont des haut-parleurs externes ou dans lequel les haut-parleurs présents dans le véhicule automobile utilisé sont utilisés pour la restitution de données audio.
